# EUROPÄISCHE PATENTANMELDUNG

(11) **EP 4 494 453 A1**
(43) Veröffentlichungstag der Anmeldung: **22.01.2025**
(21) Anmeldenummer: 24171784.2
(22) Anmeldetag: 23.04.2024
(51) Int. Cl.: A01F 15/08

(54) **LANDWIRTSCHAFTLICHE BALLENPRESSE SOWIE VERFAHREN UND VORRICHTUNG ZUR BESTIMMUNG DES BALLENGEWICHTS EINES HIERVON GEFORMTEN ERNTEGUTBALLENS**

(30) Priorität: 20.06.2023 DE 102023116117
(71) Anmelder: Pöttinger Landtechnik GmbH, 4710 Grieskirchen (AT)
(72) Erfinder: PUCKMAYER, Daniel, 4710 Grieskirchen (AT); ANTLINGER, Johannes, 4710 Grieskirchen (AT)
(74) Vertreter: Thoma, Michael

(57) **Zusammenfassung**

Die vorliegende Erfindung betrifft die Bestimmung des Ballengewichts eines von einer landwirtschaftlichen Ballenpresse geformten Erntegutballens. Die Erfindung betrifft dabei einerseits ein Verfahren sowie eine Vorrichtung zur Bestimmung des Ballengewichts mithilfe verschiedener Sensorsignale einer an der Ballenpresse vorhandenen Sensorik, sowie andererseits auch die Ballenpresse selbst. Erfindungsgemäß besitzt die Ballenpresse eine Sensorik zum Erfassen der Feuchtigkeit des von der Ballenpresse aufgenommenen Erntegutstroms, zum Erfassen der Ballendichte des Erntegutballens in der Ballenformkammer, sowie zum Erfassen des Ballendurchmessers.

## Beschreibung

Die vorliegende Erfindung betrifft die Bestimmung des Ballengewichts eines von einer landwirtschaftlichen Ballenpresse geformten Erntegutballens. Die Erfindung betrifft dabei einerseits ein Verfahren sowie eine Vorrichtung zur Bestimmung des Ballengewichts mithilfe verschiedener Sensorsignale einer an der Ballenpresse vorhandenen Sensorik, sowie andererseits auch die Ballenpresse selbst.

Die Bestimmung des Gewichts von Erntegutballen kann aus verschiedenen Gründen sinnvoll sein, beispielsweise für die Erfassung des Flächenertrags oder zur Steuerung von Einstellungen an der Wickelvorrichtung oder der Ballenpresse.

Bislang wird die Gewichtsmessung von Erntegutballen meist auf dem Wickeltisch gemacht, der hinter der Ballenformkammer vorgesehen ist und üblicherweise eine Gewichtssensorik wie einen Kraftmessbolzen aufweist, vgl. beispielsweise NL 20 10 169 C, EP 20 00 785 B1, EP 10 34 695 B1, EP 27 45 675 B1 oder EP 40 56 024 A1.

Die Wiegesysteme können dabei grundsätzlich mit verschiedenen Arten von Sensoren arbeiten und beispielsweise Drucksensoren bzw. Wiegezellen umfassen, die den Druck messen, der durch das Gewicht des Ballens auf die Tragarme der Presse oder des Wickeltischs ausgeübt wird. Alternativ werden auch Beschleunigungssensoren eingesetzt, um die Veränderung der Beschleunigung zu messen, die durch das Aufnehmen des Ballens verursacht wird. Auch Dehnungsmessstreifen finden Verwendung, die die Verformung von Tragarmen oder anderen Chassis-Elementen erfassen, um das Ballengewicht zu bestimmen.

Solche Wiegesysteme sind jedoch oft empfindlich und in jedem Fall teuer. Gleichzeitig können Messfehler auftreten, beispielsweise wenn die Ballenpresse bzw. der daran angebaute Wickeltisch bei Hangfahrten schrägstehen bzw. zu stark geneigt sind, zumindest dann, wenn keine teuren Kompensiermaßnahmen ergriffen werden, die das Wiegesystem auch bei geneigtem Aufstand präzise messen lassen.

Hiervon ausgehend liegt der vorliegenden Erfindung die Aufgabe zugrunde, eine verbesserte Ballenpresse der genannten Art sowie verbesserte Verfahren und Vorrichtungen zum Bestimmen des Ballengewichts der von der Ballenpresse geformten Erntegutballen zu schaffen, die Nachteile des Standes der Technik vermeiden und letzteren in vorteilhafter Weise weiterbilden. Insbesondere soll eine genaue Bestimmung des Ballengewichts mit der an einer Ballenpresse normalerweise vorhandenen, einfachen Sensorik ermöglicht werden, ohne teure Wiegesysteme bzw. teure Kompensiermaßnahmen für solche Wiegemaßnahmen zu benötigen.

Erfindungsgemäß wird die genannte Aufgabe durch ein Verfahren gemäß Anspruch 1, eine Vorrichtung gemäß Anspruch 12 sowie eine landwirtschaftliche Ballenpresse gemäß Anspruch 14 gelöst. Bevorzugte Ausgestaltungen der Erfindung sind Gegenstand der abhängigen Ansprüche.

Es wird also vorgeschlagen, in einer regulären Betriebsphase der Ballenpresse das Ballengewicht der Erntegutballen ohne tatsächliche Wägung und damit ohne Zuhilfenahme eines Wiegesystems zu bestimmen und stattdessen eine Abschätzung des Ballengewichts anhand hierfür aussagekräftigen Parametern zu treffen, die von der an der Ballenpresse an sich für andere Zwecke vorhandenen Sensorik bereitgestellt werden. Um die Abschätzung mit ausreichender Genauigkeit treffen zu können, werden in einer Trainingsphase die genannten Parameter in Form der Sensorsignale der Sensorik zusammen mit den in der Trainingsphase noch tatsächlich nachgemessenen Ballengewichten abgespeichert und ausgewertet, um den funktionalen Einfluss der sensorisch erfassten Parameter auf das tatsächliche Ballengewicht zu bestimmen. Anhand des aus der Trainingsphase bekannten Zusammenhangs zwischen den sensorisch erfassten Parametern und den tatsächlichen Ballengewichten kann dann in der Betriebsphase das Ballengewicht ohne ein Signal eines Wiegesystems nur anhand der sensorisch erfassten Parameter und des bekannten Zusammenhangs bestimmt werden.

Erfindungsgemäß besitzt die Ballenpresse eine Sensorik zum Erfassen der Feuchtigkeit des von der Ballenpresse aufgenommenen Erntegutstroms, zum Erfassen der Ballendichte des Erntegutballens in der Ballenformkammer, sowie zum Erfassen des Ballendurchmessers. Eine solche Sensorik ist an sich an vielen Ballenpressen vorhanden, um an sich andere Steuerungsaufgaben zu erfüllen, beispielsweise um die Spannung der variablen Riemen einzustellen. In einer Trainingsphase werden mittels der genannten Sensorik für mehrere Ballenformvorgänge jeweils die Feuchtigkeit des Erntegutstroms, die Ballendichte des in der Ballenformkammer der Ballenpresse geformten Erntegutballens und der Ballendurchmesser erfasst. Zusätzlich wird in der Trainingsphase auch noch das Gewicht der jeweils geformten Erntegutballen mittels eines Wiegesystems gemessen. In einem Trainingsspeicher werden die Datensätze aus der Trainingsphase, die die erfassten Feuchtigkeiten, die erfassten Ballendichten und die erfassten Ballendurchmesser zusammen mit den zugehörigen, gemessenen Ballengewichten umfassen, in einem Trainingsspeicher abgespeichert. Die gespeicherten Datensätze werden von einer Auswerteeinrichtung analysiert, wobei Zusammenhänge zwischen den gemessenen Ballengewichten und den erfassten Feuchtigkeiten, Ballendichten und Ballendurchmesser bestimmt werden. In einer dann nach der Trainingsphase erfolgenden Betriebsphase wird mittels der genannten Sensorik für eine jeweils aktuelle Ballenformung die aktuelle Feuchtigkeit des aufgenommenen Erntegutstroms, die aktuelle Ballendichte des in der Ballenformkammer der Ballenpresse geformten Erntegutballens und der aktuelle Ballendurchmesser erfasst, wobei von der Auswerteeinrichtung, die die Trainingsdaten ausgewertet hatte, oder auch einer anderen Auswerteinrichtung dann anhand der zuvor in der Trainingsphase bestimmten Zusammenhänge das Ballengewicht des aktuell geformten Ballens aus der aktuell erfassten Feuchtigkeit, der aktuell erfassten Ballendichte und dem aktuell erfassten Ballendurchmesser ohne Messsignal eines Wiegesystems bestimmt wird.

Die vorgeschlagene Lösung gestattet es, in der regulären Betriebsphase auf ein teures Wiegesystem zu verzichten. Insbesondere brauchen keine besonderen Kompensationsmaßnahmen ergriffen werden, um auch bei Hangfahrten oder allgemein geneigtem Aufstand der Ballenpresse präzise Ballengewichte zu erhalten. Zusätzlich ist es von Vorteil, dass an sich nur die bereits schon vorhandene Sensorik an der Ballenpresse genutzt wird und keine zusätzlichen Sensoren erforderlich sind, sodass die Ballenpresse insgesamt kostengünstiger und robuster ausgeführt sein kann und keine Wiegesysteme mit verbautem Messequipment benötigt. Gleichzeitig kann durch die Abschätzung des Ballengewichts aus der erfassten Feuchtigkeit des aufgenommenen Erntegutstroms, der aktuellen Ballendichte und des aktuellen Durchmessers auch schon während des Ballenformvorgangs eine in die Zukunft weisende Prognose für das letztlich entstehende Ballengewicht abgegeben werden. Dies ermöglicht schnelle Entscheidungen, wie z.B. das Vorhersagen der Ballengröße in einer bestimmten Entfernung oder am Ende der Fahrgasse oder das Überprüfen der Ballengewichte während des Betriebs.

Erstaunlicherweise kann eine sehr hohe Genauigkeit bei der Bestimmung des Ballengewichts erzielt werden, deren Abweichung vom tatsächlichen Ballengewicht weniger als 10% oder auch weniger als 5% beträgt.

In Weiterbildung der Erfindung werden die Feuchtigkeit des aufgenommenen Ernteguts, die Ballendichte und der Ballendurchmesser von der Sensorik jeweils in Echtzeit bestimmt. Die in Echtzeit arbeitende Sensorik kann die genannten Parameter Feuchtigkeit, Ballendichte und Ballendurchmesser sowohl in der Trainingsphase als auch in der späteren, regulären Betriebsphase jeweils in Echtzeit bereitstellen. Dies ermöglicht es, im Trainingsspeicher nicht nur einzelne Werte der genannten Parameter abzuspeichern, sondern deren Verlauf über jeweils einen Ballenformvorgang, sodass die Auswerteeinrichtung den sich über einen Ballenformvorgang ergebenden Verlauf der Feuchtigkeit, der Ballendichte und des Ballendurchmessers auf einen sich ergebenden Zusammenhang mit dem dann tatsächlich erreichten, nachgemessenen Ballengewicht auswerten kann. Dies ist insofern sehr hilfreich, da die Feuchtigkeit des aufgenommenen Erntegutstroms über einen Ballenvorgang variieren kann, beispielsweise in einer Fahrgasse am Waldrand eher hoch und in einer Fahrgasse in einem sonnigen Feldabschnitt eher niedrig sein kann. Ebenso kann auch die Ballendichte des in der Kammer zu formenden Ballens über den Formvorgang variieren, beispielsweise partiell höher sein, wenn ein eher voluminöser Erntegutteppich von der Aufnahmevorrichtung der Ballenpresse aufgenommen und in die Ballenformvorkammer gefördert wird, und eher niedriger sein, wenn sich der aufzunehmende Erntegutteppich ausdünnt. In ähnlicher Weise kann auch der Ballendurchmesser über den Ballenformvorgang nicht nur linear, sondern auch in unterschiedlichen Geschwindigkeiten wachsen.

Vorzugsweise werden die Verläufe der Sensorsignale, die die Feuchtigkeit, die Ballendichte und den Ballendurchmesser angeben, verknüpft mit dem nachgemessenen, tatsächlichen Ballengewicht des jeweiligen Ballenformvorgangs in dem Trainingsspeicher abgespeichert, sodass dieser Trainingsspeicher diverse Datensätze enthält, die jeweils die genannten Signalverläufe und das zugehörige nachgemessene Ballengewicht umfassen. Ein Datensatz kann also insbesondere den Verlauf der Feuchtigkeit, den Verlauf der Ballendichte und den Verlauf des sich entwickelnden Ballendurchmessers über einen Ballenformvorgang zusammen mit dem dann für diesen Ballenformvorgang nachgemessenen Ballengewicht umfassen. Die genannten Datensätze können dann von der Auswerteeinrichtung auf einen Zusammenhang zwischen tatsächlichem Ballengewicht und den genannten Verläufen ausgewertet werden.

Werden die genannten Parameter in Echtzeit erfasst, kann die Auswerteeinrichtung beispielsweise die Steigung und/oder die Krümmung der Signalverläufe berücksichtigen und deren Auswirkungen auf den zu bestimmenden Zusammenhang mit dem nachgemessenen Ballengewicht bestimmen. Beispielsweise kann nach einer am Anfang des Ballenvorgangs recht hohen Feuchtigkeit ein steilerer Abfall der Feuchtigkeit eintreten, woraus die Auswerteeinrichtung schließen kann, dass eine erhöhte Feuchtigkeit des Erntegutstroms durch eine Besonderheit wie beispielsweise einen Fahrgassenabschnitt in einer Feuchtesenke, bedingt war und insofern nur recht partiell auftreten wird, sodass sich insgesamt eine deutlich niedrigere Gesamtfeuchte ergeben wird, was dann wiederum zu einer nur geringeren Erhöhung des Ballengewichts aufgrund eines nur kleineren Bestandteils von Erntegut höherer Feuchtigkeit führen wird.

Alternativ oder zusätzlich zur Auswertung von Steigung und Krümmung der Signalverläufe kann die Auswerteeinrichtung aber auch die Signalverläufe integrieren, um eine Gesamtfeuchtigkeit, Gesamtballendichte und Gesamtballendurchmesser zu bestimmen bzw. korrigieren oder abschätzen zu können. Insbesondere kann die Auswerteeinrichtung auch dazu konfiguriert sein, Signalverläufe zueinander in Beziehung zu setzen, um zu bestimmen, in welchen partiellen Bereichen des zu formenden Erntegutballens welche Feuchtigkeiten und/oder welche Dichten auftreten. Kennt die Auswerteeinrichtung den aktuellen Durchmesser des sich in der Kammer formenden Ballens, kann die Auswerteeinrichtung abschätzen, in welchem Abschnitt ein gerade einlaufender Teil des Erntegutteppichs und dessen Feuchtigkeit in den Ballen einläuft bzw. eingeformt wird. Beispielsweise wird bei noch sehr kleinen Ballendurchmessern am Anfang des Formvorgangs einlaufendes Erntegut mit höherer Feuchtigkeit sozusagen in den Kern des Erntegutballens und damit nur in einen kleineren Teil verbaut, sodass die Auswerteeinrichtung rückschließen kann, welchen Anteil der Erntegutteil mit höherer Feuchtigkeit im fertigen Ballen haben wird.

Insbesondere kann die genannte Auswerteeinrichtung einen KI-Baustein zum Bestimmen des genannten Zusammenhangs zwischen dem in der Trainingsphase nachgemessenen Ballengewichten und den in der Trainingsphase erfassten Feuchtigkeiten, Ballendichten und Ballendurchmessern aufweisen. Ein solcher KI-Baustein kann beispielsweise einen Regressions-Analysebaustein aufweisen, um eine Beziehung zwischen den von der Sensorik erfassten Parametern und den in der Trainingsphase nachgemessenen Ballengewichten und ggf. auch zwischen den Abhängigkeiten der sensorisch erfassten Parameter voneinander abzuschätzen. Beispielsweise kann ein solcher Regressions-Analysebaustein einen funktionalen Zusammenhang zwischen den erfassten Parametern Feuchtigkeit, Ballendichte und Ballendurchmesser einerseits und Ballengewicht andererseits bzw. eine Kurve per Regression bestimmen, die die Abhängigkeit des Ballengewichts von den genannten sensorisch erfassbaren Zustandsparametern charakterisiert.

Insbesondere kann der genannte KI-Baustein auch ein neuronales Netzwerk umfassen bzw. darauf Zugriff haben, sodass in der Trainingsphase erfassten Parametern, insbesondere die erfassten Feuchtigkeiten, die erfassten Ballendichten und die erfassten Ballendurchmesser sowie die vom Wiegesystem nachgemessenen Ballengewichte, in das neuronale Netzwerk eingespeist werden, um dort die zuvor genannten Zusammenhänge zwischen den sensorisch erfassten Parametern und dem nachgemessenen Ballengewicht zu bestimmen und eine Regel für die Abschätzung des Ballengewichts aus den genannten Parametern alleine, das heißt ohne Zuhilfenahme eines Wiegesystems, für die spätere Betriebsphase zu gewinnen.

Ein solches neuronales Netzwerk oder allgemein auch die zuvor genannte Auswerteeinrichtung kann beispielsweise mit einem Gewichtungsbaustein arbeiten, um einem oder mehreren der sensorisch erfassten Parametern oder einer Anomalität beispielsweise im Sinne einer Abweichung eines sensorisch erfassten Parameters von einem Durchschnittswert aus anderen Trainingsdurchgängen ein größeres oder auch ein kleineres Gewicht beizumessen als einem anderen sensorisch erfassten Parameter bzw. dessen Abweichung von einem Durchschnittswert. Beispielsweise kann die Gewichtung dahingehend verschoben werden, dass bei den genannten drei sensorisch erfassten Parametern Feuchtigkeit, Ballendichte und Ballendurchmesser einer vom Durchschnittswert größeren Abweichung der Ballendichte größeres Gewicht beigemessen wird als einer größeren Abweichung des Ballendurchmessers vom Durchschnittswert, und die Abschätzung des Ballengewichts weniger stark bzw. stärker korrigiert wird, entsprechend der Gewichtung.

Um die Genauigkeit der Abschätzung des Ballengewichts noch weiter zu erhöhen, können auch noch weitere Parameter berücksichtigt und ggf. sensorisch erfasst werden. Vorteilhafterweise wird zumindest die Anzahl der Schneidmesser eines Schneidwerks berücksichtigt, welches den Erntegutstrom auf seinem Weg in die Ballenformkammer zerschneidet. Hierzu werden in der Trainingsphase vorteilhafterweise mehrere Ballenformvorgänge gefahren und hierfür verschiedene Anzahlen von Messern verwendet. Die jeweilige Messerzahl wird zusätzlich zu dem tatsächlich erfassten Ballengewicht zu den jeweiligen Datensätzen gespeichert, sodass ein jeweiliger Datensatz die zuvor genannten Parameter Feuchtigkeit, Ballendichte und Ballendurchmesser sowie die beim Ballenformvorgang verwendete Anzahl an Schneidmessern umfasst und zusätzlich auch noch das von der Wiegeeinrichtung nachgemessene tatsächliche Ballengewicht aufweist. Die Auswerteeinrichtung, insbesondere der zuvor genannte KI-Baustein wertet diese Datensätze aus der Trainingsphase aus, um einen Zusammenhang auch zwischen der Anzahl der Schneidmesser und dem entstehenden Ballengewicht abzuleiten, und dann bei der Abschätzung des Ballengewichts in der Betriebsphase auch die Anzahl der Schneidmesser zu berücksichtigen.

Insbesondere kann eine höhere Zahl an Schneidmessern, die regelmäßig zu einer kürzeren Schnittlänge der zerschnittenen Erntegutstängel bzw. -halme führt, zu einer höheren Ballendichte und damit auch zu einem höheren Endgewicht des Erntegutballens führen, während umgekehrt ein Schneidwerk, das mit weniger Schneidmessern arbeitet, längeres Schnittgut in die Ballenformkammer gelangen lässt, sodass ein geringeres Ballengewicht erwartet werden darf.

Die Anzahl der Schneidmesser kann von der Sensorik erfasst werden, beispielsweise durch eine sensorische Überwachung der Belegung der vorhandenen Montageplätze für Schneidmesser. Alternativ oder zusätzlich kann die Anzahl der Schneidmesser aber auch über eine Eingabevorrichtung manuell eingebbar sein, oder auch aus einem Rüstzustandstack ausgelesen werden.

Um eine erhöhte Genauigkeit der Abschätzung des Ballengewichts zu erreichen, kann als weiterer Parameter auch der Ernteguttyp berücksichtigt werden, wobei als Ernteguttyp beispielsweise eine Unterscheidung getroffen werden kann zwischen zumindest zwei oder auch mehreren der Ernteguttypen Luzerne, Grünschnittroggen, Raygras, Haferstroh, Gerstenstroh, Weizenstroh oder auch Mischgut. Der Ernteguttyp kann dabei manuell eingegeben oder aus einer Feldkarte ausgelesen bzw. eingespielt werden oder auch automatisiert sensorisch bestimmt werden, beispielsweise mittels eines Kamerasystems mit Bildauswertung, wobei das Kamerasystem beispielsweise beim Mähen oder auch direkt beim Aufnehmen des Erntegutstroms das Erntegut optisch erfassen kann, sodass dann die Bildauswerteeinrichtung beispielsweise durch Vergleich mit Referenzbildern bestimmen kann, um welchen Ernteguttyp es sich handelt. Alternativ oder zusätzlich kann eine Ernteguttyp-Bestimmungseinrichtung auch in anderer Weise ausgebildet sein, beispielsweise Zugriff auf eine Ackerschlagkartei haben oder Aufzeichnungen anderer Feldbearbeitungsmaschinen wie beispielsweise eines Mähdreschers zugreifen, um Informationen über den Ernteguttyp zu gewinnen.

Der Ernteguttyp wird dabei vorteilhafterweise in der Trainingsphase für die jeweiligen Ballenformvorgänge erfasst oder eingegeben oder in der genannten Weise bestimmt und zu den Datensätzen im Trainingsspeicher gespeichert, sodass die jeweiligen Datensätze zusätzlich zu den zuvor genannten Parametern auch noch den Ernteguttyp umfassen, der den jeweiligen Erntegutballen charakterisiert.

Die genannte Auswerteeinrichtung, insbesondere der genannte KI-Baustein berücksichtigt dann auch die zusätzlichen Informationen zum Ernteguttyp, um aus den Trainingsdatensätzen einen Zusammenhang zwischen Ernteguttyp und Ballengewicht, in Verbindung mit den genannten weiteren Parametern Ballendurchmesser, Ballendichte und Feuchtigkeit, und dem Ballengewicht zu bestimmen, sodass dann bei der Abschätzung des Ballengewichts in der Betriebsphase auch das jeweils verwertete bzw. den Ballen ausmachende Erntegut für die Abschätzung des Ballengewichts verwendet werden kann.

Um die für die Abschätzung des Ballengewichts wichtige Feuchtigkeit des aufgenommenen Ernteguts möglichst präzise bestimmen zu können, insbesondere auch online und kontinuierlich bei schnellen und/oder variierenden Erntegutströmen kann ein Feuchtigkeitssensor an der Ballenpresse, insbesondere in dem Bereich von dessen Aufnahmevorrichtung, vorgesehen sein und/oder ggf. auch ein Feuchtigkeitssensor im Bereich der Ballenformkammer angeordnet sein. Ungeachtet von der Positionierung kann der genannte Feuchtigkeitssensor vorteilhafterweise einen Leitwert- und/oder Widerstands-Messbaustein aufweisen, um die Feuchtigkeit mittels Leitwertmessung bzw. Widerstandsmessung zu bestimmen. Alternativ oder zusätzlich kann der Feuchtigkeitssensor aber auch kapazitiv messend und/oder im nahen Infrarotbereich messend ausgebildet sein und/oder mit Mikrowellen messend ausgebildet sein.

Vorteilhafterweise kann der Feuchtigkeitssensor auch mehrere Messbausteine umfassen, die mit verschiedenen Messprinzipien arbeiten, beispielsweise einen Leitwert- und/oder Widerstandsmessbaustein sowie einen kapazitiven Messbaustein umfassen, um die Feuchtigkeit präzise bestimmen zu können.

Um den für das Ballengewicht relevanten Parameter Ballendichte präzise messen bzw. erfassen zu können, kann ein Dichtesensor vorgesehen sein, der die Ballendichte indirekt misst bzw. bestimmt. Insbesondere kann die Ballendichte von einem Pressdruck in der Ballenformkammer abgeleitet werden bzw. aus dem Pressdruck rechnerisch bestimmt werden, sodass der Ballendichtesensor als Pressdrucksensor ausgebildet ist.

Ein solcher Pressdrucksensor kann insbesondere dazu konfiguriert sein, die Spannkraft und/oder Zugkraft eines oder mehrerer den Ballen umspannenden Riemen in der Ballenformkammer zu erfassen, da die Riemenspannkraft ein verlässliches Maß für die Ballendichte ist.

Beispielsweise kann in einem Druckaktor, insbesondere in einem Hydraulikzylinder oder in einem Druckversorgungssystem der Druckmittel-Druck von einem Drucksensor gemessen werden, der als Maß für die Ballendichte verwendet wird. Der genannte Druckmittelaktor kann dabei ein Spannaktor sein, welcher einen oder mehrere Riemen in der Ballenformkammer spannt.

Alternativ oder zusätzlich zu einem Riemenspann-Sensor kann der Ballendichte-sensor auch einen Lagerreaktionskraft-Sensor aufweisen, welcher die Lagerreaktionskraft an einer vom Ballen beaufschlagten Umlenkrolle in der Ballenformkammer misst.

Vorteilhafterweise kann die genannten Ballendichtesensorik mehrere Sensoren der genannten Art umfassen, um aus verschiedenen Quellen Signale zu bekommen, die die Ballendichte charakterisieren, sodass ein Ballendichte-Signalwert aus den verschiedenen Einzelsignalen abgeleitet werden kann.

Der Ballendurchmesser kann von der Sensorik ebenfalls in verschiedener Weise bestimmt werden, wobei vorteilhafterweise ein Ballendurchmesser-Sensor berührungslos arbeitend ausgebildet sein kann. Insbesondere kann der Ballendurchmesser-Sensor als Abstandssensor ausgebildet sein, welcher den Abstand der Ballenoberfläche von einem festen oder bekannten Montagepunkt bestimmt bzw. erfasst. Beispielsweise kann ein Ultraschallsensor vorgesehen sein, um den Abstand der Ballenumfangsfläche des Erntegutballens in der Ballenformkammer von einem Montagefestpunkt zu bestimmen.

Alternativ oder zusätzlich kann der Ballendurchmesser-Sensor aber auch einen Winkelsensor umfassen, um den Winkel einer Ballenoberfläche zu einer vorbestimmten Referenzfläche bzw. Referenzausrichtung zu bestimmen. Aus dem bestimmten Winkel kann dann der Ballendurchmesser rechnerisch abgeleitet werden.

Die Erfindung wird nachfolgend anhand eines bevorzugten Ausführungsbeispiels und zugehörigen Zeichnungen näher erläutert. In den Zeichnungen zeigen:
- Fig. 1:: eine Seitenansicht einer Ballenpresse nach einer vorteilhaften Ausführung der Erfindung, und
- Fig. 2:: eine Seitenansicht des Innenlebens der Ballenpresse aus Fig. 1, die die Ballenformkammer sowie den Förderrotor und den hierdurch in die Ballenformkammer geförderten Erntegutstrom nebst der Sensorik zum Erfassen von Betriebs- und Erntegutparametern zeigt.

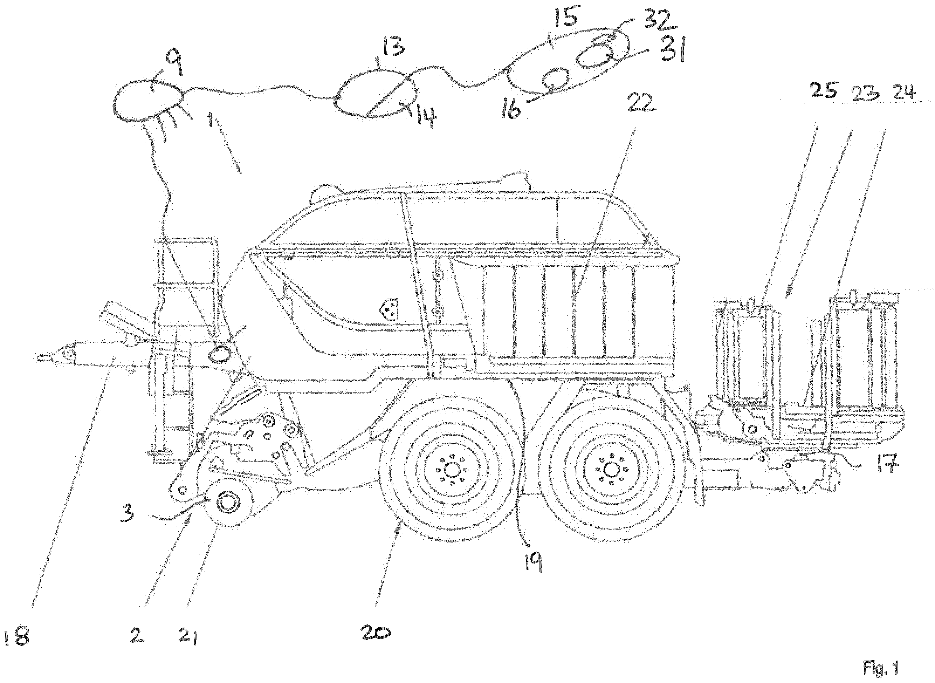

Wie Figur 1 zeigt, kann die Ballenpresse 1 als Anbaugerät ausgebildet sein, das an einen nicht gezeigten Schlepper anbaubar ist, beispielsweise mittels einer Deichsel 18, die mit einem Maschinenrahmen 19 verbunden ist, der durch ein Fahrwerk 20 am Boden abgestützt ist.

An dem Maschinenrahmen 3 kann ein Aufsammler bzw. eine Aufnahmevorrichtung 2 zum Aufsammeln von Erntegut vom Boden aufgehängt sein, wobei der genannte Aufsammler 2 beispielsweise in Form einer Pickup 3 mit einer umlaufend antreibbaren Stachelwalze und einem nachgeschalteten Förderrotor 4 ausgebildet sein kann, um Erntegut wie Heu, Stroh oder Gras vom Boden aufzusammeln. Der genannte Aufsammler 2 kann hierbei durch ein Tastfahrwerk 21 über den Boden geführt und gegenüber dem Maschinenrahmen 19 schwenkbar sein.

Das vom Aufsammler bzw. der Aufnahmevorrichtung 2 vom Boden aufgesammelte Erntegut wird an einen Ballenformer 22 übergeben, der in an sich bekannter Weise eine Ballenformkammer 7 aufweisen kann, in der mittels umlaufender Riemen 21 und/oder umlaufender Walzen hereinkommendes Erntegut zu einem Ballen geformt werden kann. Der genannte Ballenformer 22 einschließlich seiner Ballenformkammer 7 kann auf dem genannten Maschinenrahmen 3 gelagert sein.

Dem Ballenformer 7 nachgeordnet kann ein Wickler 23 sein, an den der Ballenformer 22 einen fertig geformten Ballen übergeben kann. Der genannte Wickler 23 kann den Ballen mit einem Netz, einer Folie oder einem anderen Umwicklungsmaterial umwickeln, bevor der umwickelte Ballen dann auf dem Boden abgelegt wird. Der genannte Wickler 23 kann hierzu in an sich bekannter Weise einen Wickeltisch 24 und hier herum angeordnete Wickelelemente 25 beispielsweise in Form von Wickelwalzen aufweisen, vgl. Figur 1.

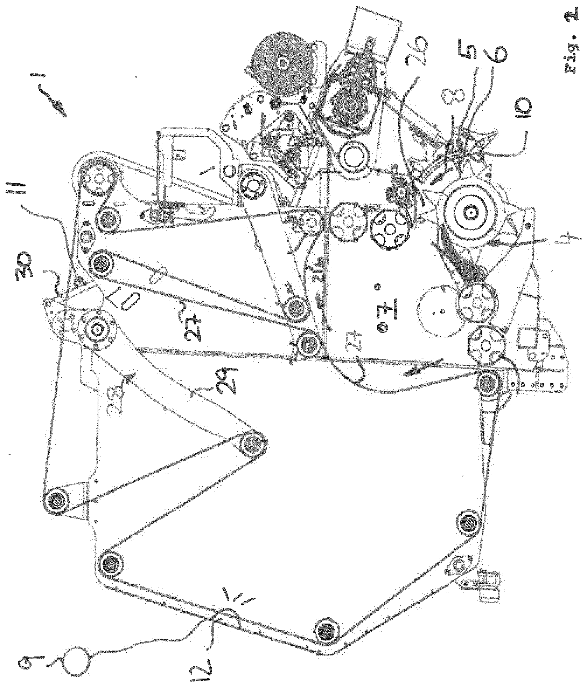

Wie Figur 2 zeigt, kann der genannte Förderrotor 4 den Erntegutstrom 8 durch einen Förderkanal 26 hindurch in die Ballenformkammer 7 fördern, wobei in den genannte Förderkanal 26 Schneidmesser 6 eines Schneidwerks 5 zum Zerschneiden des Ernteguts angeordnet sein können, vgl. Figur 2.

An der Ballenpresse 1 kann eine Sensorik 9 vorgesehen sein, um verschiedene Erntegut- und Betriebsparameter der Ballenpresse 1 erfassen zu können, insbesondere eine Feuchtigkeit des von der Aufnahmevorrichtung 2 aufgenommenen Erntegutstroms, eine Ballendichte des sich in der Ballenformkammer 7 formenden Erntegutballens und dessen Ballendurchmesser.

Die Sensorik 9 kann hierzu einen Feuchtesensor 10 aufweisen, der beispielsweise im Bereich des genannten Förderkanals 26 angeordnet sein kann, um die Feuchtigkeit des Erntegutstroms 8 zu messen. Dieser zumindest eine Feuchtesensor 10 kann vorzugsweise einen Leitwert- und/oder Widerstandsmesser aufweisen, um die Feuchtigkeit mittels Leitwert- bzw. Widerstandsmessung zu bestimmen. Wie zuvor erläutert, können jedoch auch kapazitive Feuchtesensoren, Mikrowellen-Feuchtesensoren oder Nahinfrarot-Feuchtigkeitsmesser zum Einsatz kommen.

Die Sensorik 9 umfasst ferner einen Ballendichte-Sensor 11, der beispielsweise die Riemenspannung eines oder mehrerer Riemen 27 erfassen kann, die den sich formenden Ballen in der Ballenformkammer 7 umschlingen, vgl. Figur 2.

Vorzugsweise kann die Ballenpresse 1 als variable Ballenpresse ausgebildet sein bzw. eine variable Ballenformkammer 7 aufweisen, wobei sich die Riemen 27 spannen und in variabler Größe um den sich erst aufbauenden Erntegutballen legen lassen, vgl. Figur 2.

Zur Riemenspannung kann beispielsweise ein Riemenspanner 28 vorgesehen sein, der einen verschwenkbaren Spannarm 29 aufweisen kann, welcher eine Umlenkrolle für die Riemen 27 trägt, vgl. Figur 2. Der genannte Spannarm 29 kann von einem Druckmittelaktor beispielsweise in Form eines Hydraulikzylinders 30 verschwenkt und damit der Riemen 27 gespannt werden, vgl. Figur 2.

Der genannte Ballendichte-Sensor 11 kann dabei ein Drucksensor sein, der in dem Druckmittelaktor bzw. dem Hydraulikzylinder 30 den dort herrschenden Druck misst, welcher ein Maß für die Ballendichte des sich formenden Erntegutballens ist.

Zur Erfassung des Ballendurchmessers umfasst die genannte Sensorik 9 einen Durchmessersensor 12, der in der genannten Ballenformkammer 7 angeordnet sein kann. Ungeachtet hiervon kann der genannte Ballendurchmesser-Sensor 12 berührungslos arbeitend ausgebildet sein, beispielsweise in Form eines Ultraschallsensors, um den Abstand zwischen einem Montagefestpunkt und einer Ballenoberfläche und/oder eines sich um den Ballen schlingenden Riemens 27 zu bestimmen bzw. zu erfassen. Der Abstand ist ein Maß für den Ballendurchmesser, der aber beispielsweise auch mittels einer oder mehrerer Winkelsensoren und der sich ergebenden geometrischen Beziehungen erfasst werden kann.

Die Sensorsignale der Sensorik 9 werden einem Trainingsmodul 13 bereitgestellt, ggf. nach einer Vorverarbeitung durch einen Jobrechner oder einen Signalfilter, der der Sensorik 9 zugeordnet sein bzw. damit in Verbindung bringbar sein kann.

Die Sensorik 9 kann ferner auch einen Messeranzahl-Sensor 33 aufweisen, der die Anzahl der Schneidmesser 6 im Schneidwerk 5 erfasst. Ein solcher Messeranzahl-Sensor 33 kann beispielsweise die Montageplätze zur Montage der Schneidmesser 6 und deren Belegung bzw. Besetzung überwachen, das heißt erfassen, ob ein Schneidmesser in einem jeweiligen Montageplatz montiert ist oder nicht.

Ferner kann die Sensorik 9 auch noch einen Ernteguttyp-Sensor 34 aufweisen, um den Typus des Ernteguts zu erfassen bzw. zu bestimmen, welcher im Erntegutstrom 8 überwiegend enthalten ist bzw. aus dem letzterer besteht. Der genannte Ernteguttyp-Sensor 34 kann den Erntegutstrom 8 selbst überwachen, oder auch an einer anderen landwirtschaftlichen Maschine angebracht sein, beispielsweise einem Mähwerk, mit dem das Erntegut geschnitten worden ist oder an einem Mähdrescher angebracht sein, wobei der Sensor 34 in diesem Fall per Datenfernübertragung die erfassten Daten an die Ballenpresse 1 oder die genannte Auswerteeinrichtung 15 und/oder das Trainingsmodul 13 übermitteln kann.

Beispielsweise kann der genannte Ernteguttyp-Sensor 34 eine Kameraeinrichtung mit einer Bildauswerteeinrichtung umfassen, um das Erntegut optisch zu erfassen, wobei die Bildauswerteeinrichtung die erfassten Bilder vom Erntegut mit gespeicherten Referenzbildern vergleichen kann, um den Ernteguttyp zu bestimmen.

Für die schon erläuterte Trainingsphase können die in diversen Ballenformvorgängen geformten Erntegutballen durch ein Wiegesystem 17 hinsichtlich ihres Ballengewichts nachgemessen werden. Das Wiegesystem 17 kann dabei beispielsweise am Wickler 23 angebracht sein, beispielsweise in Form einer Wägezelle im Bereich des Wickeltischs 24. Grundsätzlich ist es aber auch möglich, ein von der Ballenpresse 1 separates Wiegesystem 17 zu verwenden, um in der Trainingsphase das Ballengewicht zu bestimmen, beispielsweise in Form eines separaten Wiegetischs, auf dem die Erntegutballen abgelegt werden können.

Die Ballenpresse arbeitet dabei zunächst in einem Trainingsmodus die diversen Ballenformvorgänge ab, wobei durch das Wiegesystem 17 das tatsächliche Ballengewicht nachgemessen wird. In späteren Betriebsphasen kann die Ballenpresse 1 dann ohne das Wiegesystem 17 arbeiten und trotzdem das Ballengewicht bestimmen.

Grundsätzlich ist aber festzuhalten, dass auch im Arbeitsbetrieb gesammelte Datensätze im Trainingsspeicher 14 abgelegt werden können, um die Auswertung der Datensätze durch KI weiter zu verfeinern bzw. die Datenbasis weiter zu vergrößern.

Zur Bestimmung der Ballengewichte der mit der Ballenpresse 1 geformten Erntegutballen wird also grundsätzlich zweistufig vorgegangen, wobei zunächst Verfahren zum Bestimmen des Ballengewichts von Erntegutballen, die von einer landwirtschaftlichen Ballenpresse aus einem aufgenommenen Erntegutstrom geformt werden, wobei in einer Trainingsphase mittels einer Sensorik 9 für mehrere Ballenformvorgänge jeweils die Feuchtigkeit des Erntegutstroms 8, die Ballendichte des in der Ballenformkammer 7 der Ballenpresse 1 geformten Erntegutballens, und der Ballendurchmesser erfasst werden, und das Gewicht der geformten Erntegutballen mittels eines Wiegesystems 17 gemessen wird, in einem Trainingsspeicher 14 die Datensätze aus der Trainingsphase beinhaltend die erfassten Feuchtigkeiten, Ballendichten und Ballendurchmesser sowie die gemessenen Ballengewichte gespeichert werden, die gespeicherten Datensätze von einer Analyseeinrichtung 15 analysiert und Zusammenhänge zwischen den gemessenen Ballengewichten und den erfassten Feuchtigkeiten, Ballendichten und Ballendurchmesser bestimmt werden, und in einer nach der Trainingsphase erfolgenden Betriebsphase mittels der genannten Sensorik 9 für eine Ballenformung die Feuchtigkeit des aufgenommenen Erntegutstroms, die Ballendichte des in der Ballenformkammer 7 der Ballenpresse 1 geformten Erntegutballens, und der Ballendurchmesser erfasst werden und von der/einer Analyseeinrichtung 15 anhand der zuvor in der Trainingsphase bestimmten Zusammenhänge aus der in der Betriebsphase erfassten Feuchtigkeit, Ballendichte und Ballendurchmessers ohne Messsignal eines Wiegesystems das Ballengewicht des geformten Ballens bestimmt wird.

Verfahren nach dem vorhergehenden Anspruch, wobei die Feuchtigkeit des aufgenommenen Erntegutstroms, die Ballendichte und der Ballendurchmesser jeweils in Echtzeit von der Sensorik 9 bestimmt werden und von der Analyseeinrichtung 15 bei der Auswertung der Datensätze aus der Trainingsphase und/oder bei der Bestimmung des Ballengewichts in der Betriebsphase der zeitliche Verlauf der erfassten Feuchtigkeit, Ballendichte und des Ballendurchmessers während des Ballenformvorgangs hinsichtlich des vom Wiegesystem gemessenen Ballengewichts und/oder hinsichtlich des ohne Signal des Wiegesystems zu bestimmenden Ballengewichts ausgewertet wird.

Verfahren nach dem vorhergehenden Anspruch, wobei die Verläufe der Sensorsignale der Sensorik 9, die die Feuchtigkeit, die Ballendichte und den Ballendurchmesser angeben, jeweils hinsichtlich ihrer Steigung und/oder ihrer Krümmung ausgewertet und/oder integriert werden, um eine sich über die Dauer eines Ballenformvorgangs ergebende Gesamtfeuchtigkeit, Gesamtballendichte und Gesamtballendurchmesser zu bestimmen, wobei vorzugsweise bei der Bestimmung der Gesamtfeuchtigkeit und der Gesamtballendichte die Signalverläufe der Sensorik 9, die die Feuchtigkeit und die Ballendichte angeben, jeweils auf den Verlauf des Signals des Ballendurchmessers und damit auf den aktuellen Zwischenstand des Ballendurchmessers bezogen werden, um zu berücksichtigen, in welchem Durchmesserabschnitt welche Feuchtigkeit und welche Ballendichte auftritt.

Verfahren nach einem der vorhergehenden Ansprüche, wobei in der Trainingsphase verschiedene Ballenformungen mit verschiedenen Anzahlen von Schneidmessern 6 eines Schneidwerks 5 zum Zerschneiden des aufgenommenen Erntegutstroms ausgeführt und die jeweilige Anzahl der Schneidmesser zu den Datensätzen in den Trainingsspeicher 14 gespeichert werden, wobei aus den im Trainingsspeicher 14 gespeicherten Datensätzen ein Zusammenhang zwischen der Anzahl der Schneidmesser und dem vom Wiegesystem 17 gemessenen Ballengewichten bestimmt wird, und wobei in der Betriebsphase das Ballengewicht zusätzlich anhand der in der Betriebsphase verwendeten Anzahl an Schneidmessern bestimmt wird.

Verfahren nach einem der vorhergehenden Ansprüche, wobei in der Trainingsphase für mehrere Ballenformungen verschiedene Ernteguttypen aufgenommen und im Trainingsspeicher 14 zu den Datensätzen gespeichert werden, wobei von der Auswerteeinrichtung aus den Datensätzen des Trainingsspeichers 14 ein Zusammenhang zwischen den Erntegutarten der aufgenommenen Erntegutströme und den vom Wiegesystem 17 gemessenen Ballengewichten bestimmt wird, und wobei in der Betriebsphase der Ernteguttyp des aufgenommenen Erntegutstroms bestimmt oder eingegeben wird und von der Auswerteeinrichtung 15 in der Betriebsphase das Ballengewicht anhand des bestimmten Zusammenhangs zwischen Erntegutart und Ballengewicht bestimmt wird.

Verfahren nach einem der vorhergehenden Ansprüche, wobei die Auswerteeinrichtung 15 die Datensätze aus dem Trainingsspeicher 14 mittels eines Regressionsbausteins einer Regression unterzieht und den Zusammenhang zwischen Feuchtigkeit des aufgenommenen Erntegutstroms, Ballendichte und Ballendurchmesser einerseits und Ballengewicht andererseits unter Zuhilfenahme der Regression bestimmt.

Verfahren nach einem der vorhergehenden Ansprüche, wobei die Auswerteeinrichtung 15 die Datensätze des Trainingsspeichers 14 einem neuronalen Netzwerk zur Bestimmung des Zusammenhangs zwischen Feuchtigkeit des aufgenommenen Erntegutstroms, Ballendichte und Ballendurchmesser einerseits und Ballengewicht andererseits zuführt.

Verfahren nach einem der vorhergehenden Ansprüche, wobei die Feuchtigkeit des aufgenommenen Erntegutstroms 8 mittels Leitwert- und/oder Widerstandsmessung mittels eines Leitwert- und/oder Widerstandssensors 10 erfasst.

Verfahren nach einem der vorhergehenden Ansprüche, wobei die Ballendichte in der Trainingsphase und in der Betriebsphase mittels eines Kraft- oder Drucksensors 11 erfasst wird, durch den eine Riemenspannung zumindest eines Riemens in der Ballenformkammer 7 der Ballenpresse erfasst wird.

Verfahren nach einem der vorhergehenden Ansprüche, wobei der Ballendurchmesser in der Ballenformkammer 7 mittels eines berührungslos arbeitenden Abstands- und/oder Winkelsensors, insbesondere Ultraschallsensor, erfasst wird, durch den ein Abstand zwischen einem den Erntegutballen umschlingenden Riemen in der Ballenformkammer 7 und einem Montagefestpunkt bestimmt wird.

Verfahren nach einem der vorhergehenden Ansprüche, wobei die Erntegutart des Erntegutstroms 8 mittels einer Bestimmungseinrichtung automatisiert bestimmt wird, insbesondere mittels eines Kamerasystems beim Mähen des Ernteguts und/oder einer Ackerschlagkartei.

Das genannte Trainingsmodul 13 umfasst einen Trainingsspeicher 14, in dem die übermittelten Sensorsignale und/oder daraus abgeleitete Informationen gespeichert werden können. Das Trainingsmodul einschließlich des Trainingsspeichers 14 kann Teil der Ballenpresse 1 sein, oder auch davon separat ausgebildet sein, wobei in diesem Fall an der Ballenpresse 1 eine Kommunikationsschnittstelle und/oder ein Kommunikationsmodul zum Übertragen der Sensorsignale vorgesehen sein kann.

Zur Auswertung der im Trainingsspeicher 14 gesammelten Datensätze ist eine Auswerteeinrichtung 15 vorgesehen, vgl. Figur 1, die eine elektronische Rechnereinrichtung beispielsweise in Form eines Servers oder eines Computers mit einem Prozessor, einem Programmspeicher und einem Arbeitsspeicher umfassen kann. Insbesondere kann die genannte Auswerteeinrichtung 15 einen KI-Baustein 31 umfassen, um die schon erläuterte Bestimmung der Zusammenhänge zwischen Feuchtigkeit des Erntegutstroms, Ballendichte und Ballendurchmesser einerseits und nachgemessenen Ballengewichten andererseits zu bestimmen. Ein solcher KI-Baustein 31 kann ein neuronales Netzwerk aufweisen bzw. darauf zugreifen. Alternativ oder zusätzlich kann der KI-Baustein 31 einen Regressionsbaustein 32 umfassen, um die Datensätze per Regressionsanalyse auszuwerten.

## Patentansprüche

1. Verfahren zum Bestimmen des Ballengewichts von Erntegutballen, die von einer landwirtschaftlichen Ballenpresse aus einem aufgenommenen Erntegutstrom geformt werden, wobei
- in einer Trainingsphase mittels einer Sensorik (9) für mehrere Ballenformvorgänge jeweils
- die Feuchtigkeit des Erntegutstroms (8),
- die Ballendichte des in der Ballenformkammer (7) der Ballenpresse (1) geformten Erntegutballens, und
- der Ballendurchmesser erfasst werden, und das Gewicht der geformten Erntegutballen mittels eines Wiegesystems (17) gemessen wird,
- in einem Trainingsspeicher (14) die Datensätze aus der Trainingsphase beinhaltend die erfassten Feuchtigkeiten, Ballendichten und Ballendurchmesser sowie die gemessenen Ballengewichte gespeichert werden,
- die gespeicherten Datensätze von einer Analyseeinrichtung (15) analysiert und Zusammenhänge zwischen den gemessenen Ballengewichten und den erfassten Feuchtigkeiten, Ballendichten und Ballendurchmesser bestimmt werden, und
- in einer nach der Trainingsphase erfolgenden Betriebsphase mittels der genannten Sensorik (9) für eine Ballenformung
- die Feuchtigkeit des aufgenommenen Erntegutstroms,
- die Ballendichte des in der Ballenformkammer (7) der Ballenpresse (1) geformten Erntegutballens, und
- der Ballendurchmesser
- erfasst werden und von der/einer Analyseeinrichtung (15) anhand der zuvor in der Trainingsphase bestimmten Zusammenhänge aus der in der Betriebsphase erfassten Feuchtigkeit, Ballendichte und Ballendurchmessers ohne Messsignal eines Wiegesystems das Ballengewicht des geformten Ballens bestimmt wird.

2. Verfahren nach dem vorhergehenden Anspruch, wobei die Feuchtigkeit des aufgenommenen Erntegutstroms, die Ballendichte und der Ballendurchmesser jeweils in Echtzeit von der Sensorik (9) bestimmt werden und von der Analyseeinrichtung (15) bei der Auswertung der Datensätze aus der Trainingsphase und/oder bei der Bestimmung des Ballengewichts in der Betriebsphase der zeitliche Verlauf der erfassten Feuchtigkeit, Ballendichte und des Ballendurchmessers während des Ballenformvorgangs hinsichtlich des vom Wiegesystem gemessenen Ballengewichts und/oder hinsichtlich des ohne Signal des Wiegesystems zu bestimmenden Ballengewichts ausgewertet wird.

3. Verfahren nach dem vorhergehenden Anspruch, wobei die Verläufe der Sensorsignale der Sensorik (9), die die Feuchtigkeit, die Ballendichte und den Ballendurchmesser angeben, jeweils hinsichtlich ihrer Steigung und/oder ihrer Krümmung ausgewertet und/oder integriert werden, um eine sich über die Dauer eines Ballenformvorgangs ergebende Gesamtfeuchtigkeit, Gesamtballendichte und Gesamtballendurchmesser zu bestimmen, wobei vorzugsweise bei der Bestimmung der Gesamtfeuchtigkeit und der Gesamtballendichte die Signalverläufe der Sensorik (9), die die Feuchtigkeit und die Ballendichte angeben, jeweils auf den Verlauf des Signals des Ballendurchmessers und damit auf den aktuellen Zwischenstand des Ballendurchmessers bezogen werden, um zu berücksichtigen, in welchem Durchmesserabschnitt welche Feuchtigkeit und welche Ballendichte auftritt.

4. Verfahren nach einem der vorhergehenden Ansprüche, wobei in der Trainingsphase verschiedene Ballenformungen mit verschiedenen Anzahlen von Schneidmessern (6) eines Schneidwerks (5) zum Zerschneiden des aufgenommenen Erntegutstroms ausgeführt und die jeweilige Anzahl der Schneidmesser zu den Datensätzen in den Trainingsspeicher (14) gespeichert werden, wobei aus den im Trainingsspeicher (14) gespeicherten Datensätzen ein Zusammenhang zwischen der Anzahl der Schneidmesser und dem vom Wiegesystem (17) gemessenen Ballengewichten bestimmt wird, und wobei in der Betriebsphase das Ballengewicht zusätzlich anhand der in der Betriebsphase verwendeten Anzahl an Schneidmessern bestimmt wird.

5. Verfahren nach einem der vorhergehenden Ansprüche, wobei in der Trainingsphase für mehrere Ballenformungen verschiedene Ernteguttypen aufgenommen und im Trainingsspeicher (14) zu den Datensätzen gespeichert werden, wobei von der Auswerteeinrichtung aus den Datensätzen des Trainingsspeichers (14) ein Zusammenhang zwischen den Erntegutarten der aufgenommenen Erntegutströme und den vom Wiegesystem (17) gemessenen Ballengewichten bestimmt wird, und wobei in der Betriebsphase der Ernteguttyp des aufgenommenen Erntegutstroms bestimmt oder eingegeben wird und von der Auswerteeinrichtung (15) in der Betriebsphase das Ballengewicht anhand des bestimmten Zusammenhangs zwischen Erntegutart und Ballengewicht bestimmt wird.

6. Verfahren nach einem der vorhergehenden Ansprüche, wobei die Auswerteeinrichtung (15) die Datensätze aus dem Trainingsspeicher (14) mittels eines Regressionsbausteins einer Regression unterzieht und den Zusammenhang zwischen Feuchtigkeit des aufgenommenen Erntegutstroms, Ballendichte und Ballendurchmesser einerseits und Ballengewicht andererseits unter Zuhilfenahme der Regression bestimmt.

7. Verfahren nach einem der vorhergehenden Ansprüche, wobei die Auswerteeinrichtung (15) die Datensätze des Trainingsspeichers (14) einem neuronalen Netzwerk zur Bestimmung des Zusammenhangs zwischen Feuchtigkeit des aufgenommenen Erntegutstroms, Ballendichte und Ballendurchmesser einerseits und Ballengewicht andererseits zuführt.

8. Verfahren nach einem der vorhergehenden Ansprüche, wobei die Feuchtigkeit des aufgenommenen Erntegutstroms (8) mittels Leitwert- und/oder Widerstandsmessung mittels eines Leitwert- und/oder Widerstandssensors (10) erfasst.

9. Verfahren nach einem der vorhergehenden Ansprüche, wobei die Ballendichte in der Trainingsphase und in der Betriebsphase mittels eines Kraft- oder Drucksensors (11) erfasst wird, durch den eine Riemenspannung zumindest eines Riemens in der Ballenformkammer (7) der Ballenpresse erfasst wird.

10. Verfahren nach einem der vorhergehenden Ansprüche, wobei der Ballendurchmesser in der Ballenformkammer (7) mittels eines berührungslos arbeitenden Abstands- und/oder Winkelsensors, insbesondere Ultraschallsensor, erfasst wird, durch den ein Abstand zwischen einem den Erntegutballen umschlingenden Riemen in der Ballenformkammer (7) und einem Montagefestpunkt bestimmt wird.

11. Verfahren nach einem der vorhergehenden Ansprüche, wobei die Erntegutart des Erntegutstroms (8) mittels einer Bestimmungseinrichtung automatisiert bestimmt wird, insbesondere mittels eines Kamerasystems beim Mähen des Ernteguts und/oder einer Ackerschlagkartei.

12. Vorrichtung zum Bestimmen des Ballengewichts von Erntegutballen, die von einer landwirtschaftlichen Ballenpresse (1) aus einem aufgenommenen Erntegutstrom (8) geformt werden, mit einer Sensorik (9) zum Erfassen von
- der Feuchtigkeit des aufgenommenen Erntegutstroms (8),
- der Ballendichte des Erntegutballens in einer Ballenformkammer (7) der Ballenpresse (1), und
- des Ballendurchmessers,
- einem Trainingsspeicher (14) zum Speichern der von der Sensorik (9) erfassten Datensätze beinhaltend die erfassten Feuchtigkeiten, Ballendichten und Ballendurchmesser für mehrere in einer Trainingsphase erfolgten Ballenformungen, jeweils verknüpft mit den von einem Wiegesystem (17) gemessenen Ballengewichten,
- einer Auswerteeinrichtung (15) zum Auswerten der im Trainingsspeicher (14) gespeicherten Datensätze und Bestimmen eines Zusammenhangs zwischen den erfassten Feuchtigkeiten, den erfassten Ballendichten und den erfassten Ballendurchmessern einerseits und den gemessenen Ballengewichten andererseits,
- wobei die/eine Auswerteeinrichtung (15) dazu konfiguriert ist, aus der von der Sensorik (9) in einer Betriebsphase erfassten Feuchtigkeit des aufgenommenen Erntegutstroms (8), der Ballendichte und des Ballendurchmessers des in der Betriebsphase geformten Erntegutballens aus den bestimmten Zusammenhang zwischen Feuchtigkeit, Ballendichte und Ballendurchmesser einerseits und gemessenen Ballengewicht andererseits ohne Zuhilfenahme eines Signals des Wiegesystems das Ballensystem zu bestimmen.

13. Vorrichtung nach dem vorhergehenden Anspruch, wobei die Auswerteeinrichtung (15) einen KI-Baustein zum Bestimmen des genannten Zusammenhangs zwischen den in den Trainingsphase gemessenen Ballengewichten und den in der Trainingsphase erfassten Feuchtigkeiten, Ballendichten und Ballendurchmessern aufweist, wobei der genannte KI-Baustein insbesondere ein neuronales Netzwerk umfasst oder darauf zugreift.

14. Landwirtschaftliche Ballenpresse mit einer Aufnahmevorrichtung (2) zum Aufnehmen von Erntegut vom Boden, einer Ballenformkammer (7) zum Formen des aufgenommenen Ernteguts zu einem Erntegutballen, einer Sensorik (9) zum Erfassen der Feuchtigkeit des von der Aufnahmevorrichtung (2) aufgenommenen Erntegutstroms, der Ballendichte des Erntegutballens in der Ballenformkammer (7) und des Ballendurchmessers in der Ballenformkammer (7), sowie einer Auswerteeinrichtung (15) zum Bestimmen des Ballengewichts anhand eines Zusammenhangs zwischen Feuchtigkeit, Ballendichte und Ballendurchmesser einerseits und Ballengewicht andererseits, welcher Zusammenhang der Auswerteeinrichtung (15) von einer Vorrichtung gemäß den Ansprüchen 1 bis 10 bereitstellbar ist.

15. Ballenpresse nach dem vorhergehenden Anspruch, umfassend eine Vorrichtung gemäß den Ansprüchen 12 bis 13.
